# EUROPÄISCHE PATENTSCHRIFT

(11) **EP 1 111 488 B1**
(45) Veröffentlichungstag und Bekanntmachung des Hinweises auf die Patenterteilung: **25.07.2007**
(21) Anmeldenummer: 00125844.1
(22) Anmeldetag: 25.11.2000
(51) Int. Cl.: G05D 1/03, G06K 9/36, B60R 16/02

(54) **Kameraeinrichtung für ein Fahrzeug**
Camera for a vehicle
Caméra pour un véhicule

(30) Priorität: 18.12.1999 DE 19961313
(43) Veröffentlichungstag der Anmeldung: 27.06.2001
(73) Patentinhaber: Bayerische Motoren Werke Aktiengesellschaft, 80809 München (DE)
(72) Erfinder: Hahn, Wolfgang, 85247 Arnbach (DE); Adiprasito, Bartano, 80799 München (DE)

(56) Entgegenhaltungen:
- FR-A- 2 785 434
- US-A- 5 892 855

## Beschreibung

Die Erfindung betrifft eine Kameraeinrichtung für ein Fahrzeug gemäß dem Oberbegriff des Anspruchs 1.

Der Einsatz von beweglich angeordneten Kameras in Fahrzeugen ist prinzipiell bekannt. Beispielsweise wird bei kameragestützten Assistenzsystemen zur Nachtsichtverbesserung dem Fahrer ein über eine Infrarotkamera aufgenommenes Bild über ein Display dargeboten. Die Bildinformationen sind für einen Fahrer insbesondere dann nutzbar, wenn er das Kamerabild schnell anhand von markanten Punkten oder Objekten mit der Fahrumgebung in Übereinstimmung bringen kann. Wird die Ausrichtung der Kamera in Bezug auf die Fahrzeuglängsachse bei einer verstellbaren Kamera jedoch immer wieder verändert, so kann ein Fahrer möglicherweise nicht mehr so schnell eine Zuordnung von Punkten und Objekten zwischen Kamerabild einerseits und Fahrzeugumgebung andererseits durchführen.

Aus der EP 0 782 059 A1 ist ein Verfahren mit einer stationär befestigten und einer beweglichen Kamera bekannt. Es wird der Winkel zwischen einem momentanen Fahrweg und einer gewünschten Fahrstrecke bestimmt. Ist dieser Winkel größer als ein vorgegebener Wert, wird die bewegliche Kamera in die gewünschte Winkelposition verfahren. Damit ist es möglich, ein ferngesteuertes Fahrzeug auch auf solchen Strecken fahren zu lassen, welche scharfe Kurven aufweisen. Aus der SE 461 797 ist eine an einem Fahrzeug befestigte Kamera vorgesehen, die in Fahrtrichtung ausgerichtet ist und die Ränder einer vorausliegenden Straße aufnehmen kann. Mit dieser Vorrichtung lassen sich die auf einer Strasse aufgebrachten Linien genau und leicht ziehen.

Aus der US-A-5 892 855 ist eine Kameraeinrichtung mit den Merkmalen des Oberbegriffs des Anspruchs 1 bekannt. Auf einem Bildschirm wird das Bild der verschwenkbaren Kameraeinrichtung und eine Motorhaube dargestellt. Die Stellung der Kameraeinrichtung relativ zur Motorhaube wird nicht erfasst und bleibt daher unberücksichtigt.

Aufgabe der vorliegenden Erfindung ist es, eine schnelle und eindeutige Zuordnung eines Kamerabildes einer beweglichen Kamera zu einem Ausschnitt einer Fahrzeugumgebung treffen zu können.

Diese Aufgabe wird durch die im Anspruch 1 genannten Merkmale gelöst.

Demgemäß wird eine Referenzmarke in den Bildschirm eingeblendet, die die Ausrichtung der Fahrzeuglängsachse angibt. Darüber hinaus werden in einer Verarbeitungseinrichtung Informationen zur Stellung der Kamera bezüglich der Fahrzeuglängsachse mitgeteilt. Die Verarbeitungseinrichtung ist derart ausgebildet, dass in Abhängigkeit von der tatsächlichen Stellung der Kamera zur Fahrzeuglängsachse eine Relativbewegung von Kamerabild einerseits und der Referenzmarke andererseits auf dem Schirm darstellbar sind. Durch die Relation von Kamerabild zu der Referenzmarke wird dem Fahrer klar, in welcher Richtung die Kamera ausgerichtet ist und er kann schneller die auf dem Bildschirm dargestellte Umgebung mit dem aufgenommen Ausschnitt der tatsächlichen Fahrzeugumgebung in Einklang bringen.

Bei der Veränderung der Relativlage von Kamerabild und Referenzmarke ist es einerseits möglich, die Referenzmarke zu bewegen. Auf der anderen Seite kann natürlich auch das Bild im Bildschirm verschoben werden. Die Referenzmarke würde dabei bezüglich des Bildschirmes ortsfest bleiben. Natürlich kann auch eine Kombination der beiden oben genannten Maßnahmen erfolgen. Bei einer Verschiebung des Bildes im Bildschirm muss sichergestellt sein, dass der Bildschirm entsprechend größer als das Bild ausgebildet ist, so dass eine Verschiebung - beispielsweise nach links und rechts - auch möglich ist.

Die Information zur Stellung der Kamera im Bezug auf die Fahrzeuglängsachse wird aus Signalen eines Sensors oder aus der Ansteuerung eines Aktuators für die Kamera ermittelt. Beispielsweise kann ein Schrittmotor für die Kamera eingesetzt werden, bei dem durch Zählung von Bewegungsschritten auf die Größe der Verschwenkung geschlossen wird.

Die Kameraausrichtung kann beispielsweise in Abhängigkeit von dem Lenkwinkel oder von Informationen eines Navigationssystems verändert werden. Beispielsweise kann aus einem Navigationssystem in einem Fahrzeug die Information entnommen werden, dass mit einer stärkeren vorausliegenden Kurve zu rechnen ist. Die Kamera kann dann präventiv in Richtung dieser Kurve verschwenken, so dass der Fahrer bereits bei Einfahrt in die Kurve mittels des kameragestützten Assistenzsystems über die vorausliegende Strecke informiert wird.

Dabei wird die Kamerastellung in Abhängigkeit von dem Lenkwinkel, von Informationen des Navigationssystem bestimmt.

Die vorliegende Erfindung wird nachfolgend anhand zweier Ausführungsbeispiele und mit Bezug auf die beiliegenden Zeichnungen näher erläutert. Die Zeichnungen zeigen in
- Fig. 1: ein schematisches Blockdiagramm einer Verschaltungsanordnung für eine erfindungsgemäße Kameraeinrichtung,
- Fig. 2a und 2b: Bildschirmdarstellungen einer erfindungsgemäßen Kameraeinrichtung, wobei bei der Alternative gemäß Fig. 2a das Kamerabild und bei der Alternative gemäß Fig. 2b die Referenzmarke bewegbar sind.

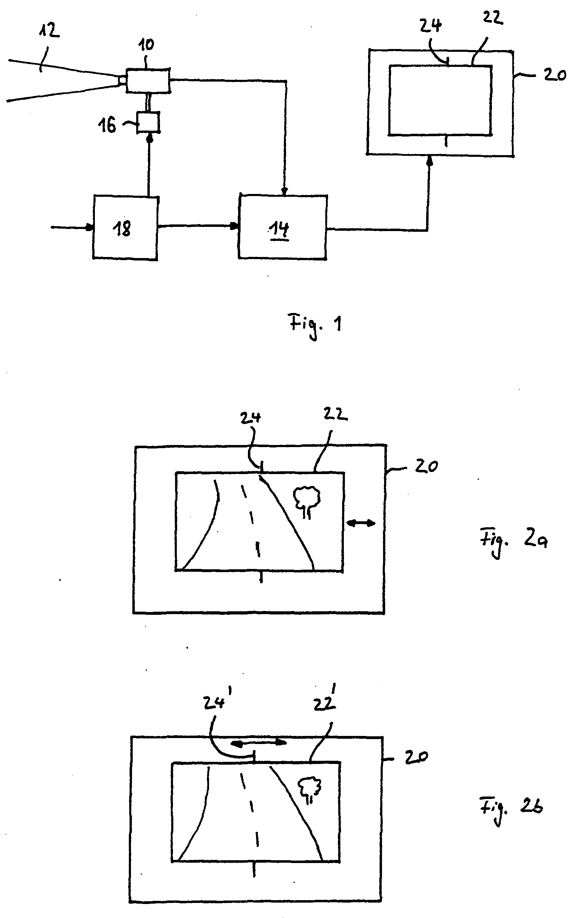

In Fig. 1 ist ein schematisches Schaltdiagramm einer Ausführungsform der vorliegenden Erfindung dargestellt. Eine Kamera 10 nimmt innerhalb eines bestimmten Aufnahmekegels 12 einen Bereich einer Fahrzeugumgebung um ein (nicht dargestelltes) Fahrzeug auf. Die Kamera 10 ist am Fahrzeug befestigt und zwar verschwenkbar. Die Verschwenkung wird mittels eines Aktuators 16 erreicht, der die Kamera 10 horizontal bewegen kann. In ihrer Normalstellung ist die Kamera 10 in Längsrichtung des Fahrzeugs ausgerichtet. Durch Beaufschlagen des Aktuators 16 über eine Aktuatorsteuerung 18 erfolgt die Verschwenkung der Kamera 10 in einem bestimmten Winkel links oder rechts der Fahrzeuglängsachse. Je nach Verschwenkung der Kamera 10 verändert sich der Aufnahmebereich. Die Aktuatorsteuerung 18 erhält Informationen von einem Navigationssystems sowie den Lenkwinkel und berechnet aus diesem die Verstellung der Kamera. Die Verstellbefehle für den Aktuator 16 werden zudem an eine Auswerteeinrichtung 14 weitergegeben, die überdies Bildinformationssignale der Kamera 10 enthält. Die Auswerteeinrichtung 14 verarbeitet die Informationen und gibt einerseits ein Bildsignal an einen Bildschirm 20 ab. Auf dem Bildschirm ist demzufolge ein Kamerabild 22 dargestellt, welches sich in einer bestimmten Lage zu einer Referenzmarke 24 befindet. Die Referenzmarke andererseits gibt eine Information über die Fahrzeuglängsachse in Bezug zur Kameraausrichtung. Durch Relativverschiebung der Referenzmarke 24 und des Kamerabildes 22 wird dem Fahrer also die Ausrichtung der Kamera bezüglich der Fahrzeuglängsachse mitgeteilt.

Zwei Ausführungsformen der Relativverschiebung sind in den Figuren 2a und 2b dargestellt. In Figur 1 ist die in Figur 2a dargestellte Verschiebung realisiert. Demgemäß wird das Kamerabild 22 je nach Kamerastellung nach links oder rechts verschoben. Die Referenzmarke 24 bleibt bezüglich des Bildschirmes 20 fest. Hierbei ist darauf zu achten, daß der Bildschirm 20 in Verschieberichtung größer als das Kamerabild 22 ausgebildet ist, so daß eine Verschiebung des Kamerabildes 22 möglich wird.

Eine Alternative ist in Fig. 2b angegeben. Dort bleibt ein Kamerabild 22' fest. Ver schoben wird hierbei lediglich die Referenzmarke 24'. Hierbei können Bildschirmgröße 20 und Bildgröße 22' übereinstimmen. In diesem Fall liegt die zu verschiebende Markierung innerhalb des Bildes.

Natürlich liefern beide Darstellungen die gleiche Information, nämlich über die Kameraausrichtung bezüglich der Fahrzeuglängsachse. Je nach gewünschter Ausführungsform kann jede Variante in der Auswerteeinheit 14 ohne weiteres realisiert werden.

Mit der vorliegenden Erfindung kann ein Fahrer insgesamt die Ausrichtung der Kamera erkennen und damit wesentlich schneller eine visuelle Übereinstimmung zwischen Kamerabild und Fahrumgebung herstellen.

## Patentansprüche

1. Kameraeinrichtung für ein Fahrzeug, umfassend eine beweglich angeordnete Kamera (10) zum Aufnehmen eines Teils einer Fahrzeugumgebung, eine mit der Kamera verbundene Verarbeitungseinrichtung (14) zur Verarbeitung der Kameradaten und einen mit der Verarbeitungseinrichtung gekoppelten Bildschirm (20) zur Darstellung der von der Kamera aufgenommenen Information in einem Bild,
wobei am Bildschirm (20) eine Referenzmarke (24) für die Ausrichtung der Fahrzeuglängsachse angezeigt wird, und wobei
die Verarbeitungseinrichtung Informationen zur Stellung der Kamera bezüglich der Fahrzeuglängsachse erhält und derart ausgebildet ist, dass eine Relativbewegung von dem Bild der Kamera und der Referenzmarke auf dem Bildschirm in Abhängigkeit von der tatsächlichen Stellung der Kamera zur Fahrzeuglängsachse durchgeführt ist, wobei
die Information zur Stellung der Kamera mittels einem Sensor oder aus der Ansteuerung eines Aktuators für die Kamera ermittelt ist, **dadurch gekennzeichnet, dass** die Kamerastellung in Abhängigkeit von dem Lenkwinkel oder von Informationen eines Navigationssystems veränderbar ist.

2. Kameraeinrichtung nach Anspruch 1, **dadurch gekennzeichnet, dass** die Lage der Referenzmarke am Bildschirm veränderbar ist.

3. Kameraeinrichtung nach Anspruch 1, **dadurch gekennzeichnet, dass** die Lage des Bildes der Kamera am Bildschirm veränderbar ist.

## Claims

1. A camera device for a vehicle, comprising a moveably arranged camera (10) for recording a part of a vehicle's environment, a processing device (14) connected to the camera for processing the camera data and a screen (20) coupled to the processing device for displaying the information recorded by the camera in an image, wherein a reference mark (24) for the orientation of the longitudinal axis of the vehicle is displayed on the screen (20), and wherein the processing device receives information on the position of the camera with respect to the longitudinal axis of the vehicle and is configured in such a way that a relative movement of the image of the camera and a reference mark on the screen is carried out as a function of the actual position of the camera with respect to the longitudinal axis of the vehicle, wherein the information on the position of the camera is determined by means of a sensor or from the activation of an activator for the camera, **characterised in that** the camera position can be changed as a function of the steering angle or of information from a navigation system.

2. A camera device according to claim 1, **characterised in that** the position of the reference mark on the screen can be changed.

3. A camera device according to claim 1, **characterised in that** the position of the image of the camera on the screen can be changed.

## Revendications

1. Installation de caméra de véhicule comprenant une caméra (10) montée de manière mobile pour filmer une partie de l'environnement du véhicule, une installation de traitement (14) reliée à la caméra pour traiter les données fournies par la caméra et un écran image (20) couplé à l'installation de traitement pour présenter dans l'image les informations prises par la caméra, selon laquelle,
l'écran image (20) comporte un repère de référence (24) pour aligner l'axe longitudinal du véhicule, et
l'installation de traitement contient des informations relatives à la position de la caméra par rapport à l'axe longitudinal du véhicule et cette installation est réalisée pour effectuer un mouvement relatif de l'image de la caméra et du repère de référence sur l'écran image selon la position effective de la caméra par rapport à l'axe longitudinal du véhicule,
l'information de position de la caméra se déterminant à l'aide d'un capteur ou à partir de la commande d'un actionneur de la caméra,
**caractérisée en ce que**
la position de la caméra est variable en fonction de l'angle de direction ou des informations d'un système de navigation.

2. Installation de caméra selon la revendication 1,
**caractérisée en ce que**
la position du repère de référence sur l'écran image est variable.

3. Installation de caméra selon la revendication 1,
**caractérisée en ce que**
la position de l'image de la caméra sur l'écran image est variable.
